# FASCICULE DE BREVET EUROPEEN

(11) **EP 0 626 830 B1**
(45) Date de publication et mention de la délivrance du brevet: **30.07.1997**
(21) Numéro de dépôt: 92904621.7
(22) Date de dépôt: 21.02.1992
(51) Int. Cl.: A61C 5/06

(54) **DISPOSITIF D'APPLICATION DE MATIERE D'OBTURATION DANS UNE CAVITE DENTAIRE**
ABGABEVORRICHTUNG ZUR FÜLLUNG VON ZAHNKAVITÄTEN MIT FÜLLSTOFFEN
DEVICE FOR DELIVERING A FILLING MATERIAL INTO A TOOTH CAVITY

(43) Date de publication de la demande: 07.12.1994
(73) Titulaire: LEMOINE, Marc Octave Paul Henri, B-1780 Wemmel (BE); DELSAUX, Bernard Georges Jules, B-1080 Bruxelles (BE)
(72) Inventeur: LEMOINE, Marc Octave Paul Henri, B-1780 Wemmel (BE); DELSAUX, Bernard Georges Jules, B-1080 Bruxelles (BE)
(74) Mandataire: Claeys, Pierre
(86) Numéro de dépôt international: BE9200004
(87) Numéro de publication internationale: WO9316653

(56) Documents cités:
- CH-A- 333 737
- FR-A- 2 032 653
- GB-A- 619 242
- US-A- 3 724 076
- US-A- 4 659 327

## Description

La présente invention est relative à un dispositif d'application de matière d'obturation dans une cavité dentaire, comprenant
- un corps principal comportant une partie de prise présentant une première cavité et une partie d'embout présentant une deuxième cavité,
- des moyens de raccordement qui sont portés par la partie de prise et par la partie d'embout et qui coopèrent de manière détachable et qui, lorsqu'ils coopèrent, permettent une communication entre les deux cavités susdites,
- un moyen de piston divisant la deuxième cavité en un premier et un deuxième compartiment, le premier compartiment servant à recevoir la matière d'obturation et étant en communication avec l'extérieur par une ouverture dans la partie d'embout, le moyen de piston étant capable de coulisser à l'intérieur de la deuxième cavité entre une première position, éloignée de l'ouverture susdite, et une deuxième position où il atteint ou éventuellement dépasse cette ouverture,
- une tige de transmission logée dans le deuxième compartiment et reliée au moyen de piston, de manière à lui transmettre une force de poussée pour le déplacer entre sa première position et sa deuxième position,
- une tige de commande logée dans la première cavité de manière à pouvoir y coulisser entre une position de repos et une position de fin de course, cette tige de commande coopérant avec la tige de transmission pendant son coulissement vers la position de fin de course de façon à lui transmettre ladite force de poussée, et
- un moyen de rappel rappelant la tige de commande dans sa position de repos.

On connaît depuis longtemps déjà en dentisterie des instruments appelés porte-amalgame ou pistolets porte-amalgame. Ces dispositifs servent à recueillir de l'amalgame ou éventuellement une résine à une de leur extrémité et à le décharger dans une cavité dentaire qui est ainsi obturée.

Pour des raisons aisément compréhensibles, ces instruments doivent être nettoyés et stérilisés après chaque patient, étant donné qu'ils sont introduits dans la bouche des patients. Le nettoyage demande beaucoup d'attention parce que les matières d'obturation sont des substances durcissables dont on peut retrouver des fragments dans le compartiment de réception de l'instrument. Il arrive que l'éjection du produit ne soit pas complète et il faut éviter que des résidus de matière d'obturation subsistent dans ce compartiment. En effet, cela ne serait pas hygiénique et ensuite cela aurait une mauvaise influence sur la charge de matière d'obturation suivante. La présence de résidus solides dans la cavité du porte-amalgame entrave en outre le coulissement du piston et peut même endommager celui-ci ou la paroi de la cavité à la suite d'un frottement trop violent.

La stérilisation des instruments doit être poussée de plus en plus depuis l'apparition de virus très résistants, comme par exemple les virus de l'hépatite B ou du SIDA, etc.

Toutes ces opérations demandent beaucoup de temps à un dentiste. Celui-ci peut compter journellement sur une bonne heure ou davantage pour la "vaisselle" de ses instruments.

On connaît un dispositif d'application du type décrit au début (le porte-amalgame n° 1612 de la firme Anthogyr, France). Ce dispositif comprend une longue partie de prise rectiligne dans laquelle peut coulisser une tige de commande rappelée par un ressort de compression. A l'extrémité de cette partie de prise est prévue une ouverture latérale où peut être raccordée, perpendiculairement à la partie de prise, un petit embout d'environ un 1/2 cm de longueur. Dans cet embout un piston et une tige de transmission sont logés ainsi qu'un second ressort de compression qui rappelle la tige de transmission dans sa position initiale. Par son extrémité, la tige de commande pousse radialement sur une extrémité arrondie de la tige de transmission en provoquant ainsi un déplacement de celle-ci perpendiculairement par rapport à la partie de prise.

Ce dispositif est prévu complètement en métal et la partie de prise pénètre elle aussi largement dans la bouche du patient pendant la manipulation. Il est donc obligatoire de nettoyer et de stériliser tout le dispositif après chaque usage. La transmission de force est mauvaise entre les deux tiges car elle repose sur un frottement qui oppose une résistance sensible à la poussée imprimée par la tige de commande.

On connaît par ailleurs des pistolets à amalgame qui comprennent une partie de prise et une partie d'embout en matière plastique. Ces deux parties sont reliées l'une à l'autre par vissage et forment ensemble une cavité dans laquelle coulisse un piston actionné par une tige de piston unique en matière plastique. Cette tige est rappelée dans sa position initiale par un long ressort de compression (voir brevet britannique 734983; le pistolet à amalgame mis sur le marché par la firme Hawe-Neos Dental Dr.H.V. Weissenfluh S.A., Suisse; le porte-amalgame Del-Ject offert en vente dans le catalogue 1991/92 de la firme Hager & Werken GmbH & Co KG, Allemagne; le porte-amalgame n° 1600 de la firme Anthogyr, France).

Ces dispositifs présentent l'inconvénient de comporter une tige de piston unique et un ressort qui s'étendent au travers de tout le corps du dispositif. Le piston vient en effet inévitablement en contact avec la cavité dentaire et il est impératif de le stériliser avant tout autre usage. Pour ce faire il faut retirer le piston à travers tout le corps du dispositif et le ressort et donc il est nécessaire de stériliser aussi ceux-ci après chaque usage. Enfin lors de la réintroduction du piston et de sa tige stérilisée, des problèmes de coulissement surgissent en particulier lorsque la partie d'embout est courbe. Or, à ce moment il n'est plus possible de toucher ces pièces, au risque de voir l'effet de la stérilisation annihilé.

On connaît aussi des dispositifs à levier, celui-ci actionnant un poussoir agissant perpendiculairement à l'axe du porte-amalgame (voir par exemple les brevets US-A-4138816, US-A-4306864, US-A-4355976 et US-A-4515563).

Des appareils d'obturation dentaires extrêmement complexes sont également déjà connus (voir par exemple les brevets US-A-4768955 et BE-823763). US-A-3 724 076 décrit un autre dispositif avec un corp principal en trois parties, une tige de commande, une tige de transmission, un moyen de piston et un moyen de rappel, tout comme defini dans la première partie de la revendication indépendante.

Tous les dispositifs qui précèdent sont en fait prévus pour un usage répété et donc ils n'offrent aucune solution aux problèmes auxquels les dentistes sont confrontés et qui ont été exposés ci-dessus.

La présente invention a pour but de mettre au point un dispositif, tel que décrit au début, qui ne présente pas les inconvénients cités ci-dessus. Ce dispositif doit présenter toutes les garanties de stérilité tout en permettant de diminuer largement les corvées de lavage et de stérilisation courantes. Il doit avantageusement être d'un emploi aisé et globalement n'occasionner aucune ou peu de dépenses supplémentaires. De préférence, il doit pouvoir être adaptable à une série d'embouts différents et permettre non seulement l'application d'amalgame ou de matière d'obturation pâteuse métallique ou à base de résine à préparer par le dentiste, mais aussi de telles matières pâteuses prêtes à l'usage, contenues dans des cupules courantes sur le marché. Les problèmes de frottement ou de coulissement du piston dans la cavité du dispositif sont avantageusement totalement surmontés.

Pour résoudre ces problèmes, il est prévu suivant l'invention un dispositif, tel que décrit au début, dans lequel la tige de commande et la tige de transmission présentent des moyens de liaison mutuelle détachables qui coopèrent de façon à transmettre aussi une force de rappel pendant le rappel de la tige de commande dans sa position de repos.

Ce dispositif offre le grand avantage que, en position de fonctionnement, la tige de commande et la tige de transmission permettent d'obtenir les mêmes résultats qu'une tige de commande unique recevant, de l'extérieur, la force de poussée et, de l'unique ressort de rappel, la force de rappel. Etant donné que ces moyens de liaison sont détachables, on peut donc détacher, de la partie de la prise, la partie d'embout, le piston et la tige de transmission pour attacher ensuite sur la même partie de prise une autre partie d'embout elle-même déjà pourvue d'un piston et d'une tige de transmission.

Suivant une forme particulière de réalisation de l'invention, la partie d'embout et la tige de transmission reliée au moyen de piston forment des éléments à jeter après chaque emploi. Avantageusement, la longueur de la partie d'embout et celle de la tige de transmission sont sensiblement supérieures à la distance existant entre n'importe quelle dent d'une bouche de patient et ses lèvres. Il en résulte ainsi que le dentiste peut nettoyer à l'aide d'un stérilisateur à billes la partie de prise, après chaque patient ce qui ne dure que quelques minutes. Toute autre manipulation nécessaire par le dentiste consiste à fixer la nouvelle partie d'embout sur la partie de prise ainsi que la nouvelle tige de transmission sur la tige de commande, ce qui peut se faire sans entrer en contact avec l'extrémité de la partie d'embout qui pénètre dans la bouche du patient.

Suivant une forme de réalisation avantageuse de l'invention, les moyens de raccordement précités peuvent être mutuellement raccordés ou détachés sans influencer la coopération entre lesdits moyens de liaison. Suivant une forme préférée de réalisation de l'invention, les moyens de raccordement précités consistent en un filet externe porté à une extrémité de la partie d'embout et en un filet interne porté à l'extrémité correspondante de la partie de prise et les moyens de liaison susdits de la tige de transmission, la tige de transmission elle-même et le moyen de piston sont capables de pivoter librement sur leur axe pendant le vissage desdits moyens de raccordement. Suivant une forme de réalisation très avantageuse de l'invention, les moyens de liaison détachables susdits comprennent une saillie prévue à une extrémité de la tige de transmission ou de la tige de commande et un évidement prévu à une extrémité de la tige de commande ou de la tige de transmission, dans lequel la saillie peut pénétrer radialement pour y être logée sans possibilité de déplacement axial dans l'évidement.

D'autres formes de réalisation suivant l'invention ressortent en particulier des revendications.

D'autres détails et particularités de l'invention ressortent également de la description ci-dessous d'un exemple de réalisation, donné à titre d'exemple et avec référence aux dessins annexés.

La figure 1 représente une vue éclatée, partiellement en coupe axiale, d'une partie d'embout d'un dispositif suivant l'invention.

La figure 2 représente une vue éclatée, partiellement en coupe axiale, d'une partie de prise d'un dispositif suivant l'invention.

La figure 3 représente, à l'état monté, une vue en coupe axiale d'un dispositif suivant l'invention formé d'une partie d'embout selon la figure 1 et d'une partie de prise selon la figure 2.

Les figures 4 et 5 représentent une vue en coupe axiale de deux variantes de partie d'embout avec leur piston.

La figure 6 représente une vue latérale d'une variante de partie d'embout permettant de recevoir une cupule de résine durcissable.

Sur les différents dessins, les éléments identiques ou analogues sont désignés par les mêmes références.

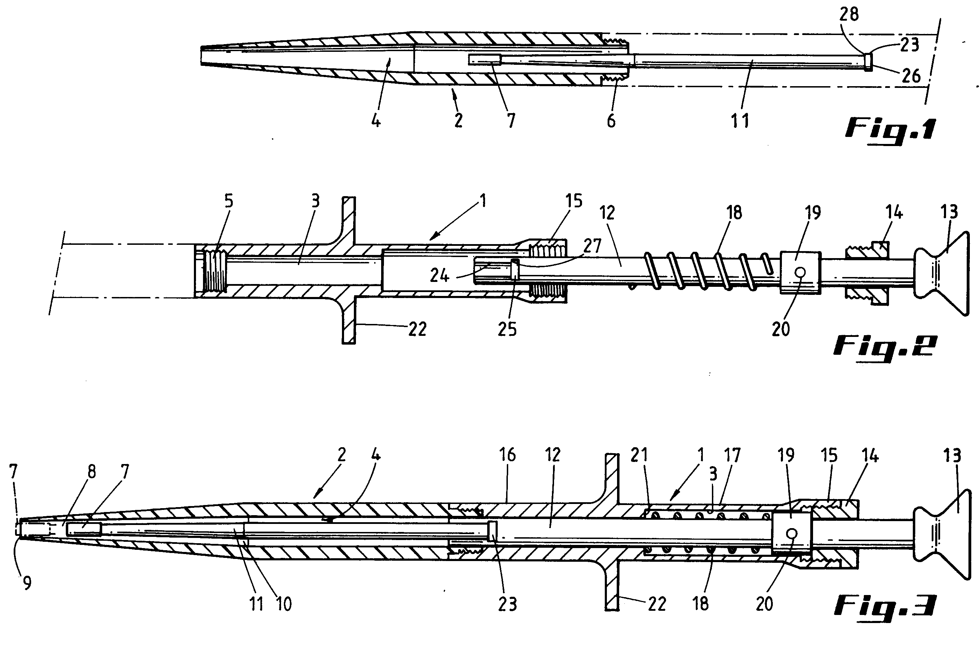

Dans l'exemple de réalisation suivant l'invention de dispositif d'application de matière d'obturation dans une cavité dentée, tel qu'illustré sur les figures 1 à 3, ce dispositif comprend un corps principal comportant une partie de prise 1 et une partie d'embout 2. La partie de prise et la partie d'embout présentent chacune une cavité 3 et respectivement 4 qui, dans cet exemple, les traversent complètement axialement. A une extrémité la partie de prise est pourvue d'un filet interne 5 et la partie d'embout d'une douille à filet externe 6 qui peut être vissée dans l'extrémité taraudée précitée de la partie de prise. Après raccordement de ces deux parties 1 et 2, les cavités 3 et 4 sont en communication et se prolongent axialement l'une l'autre.

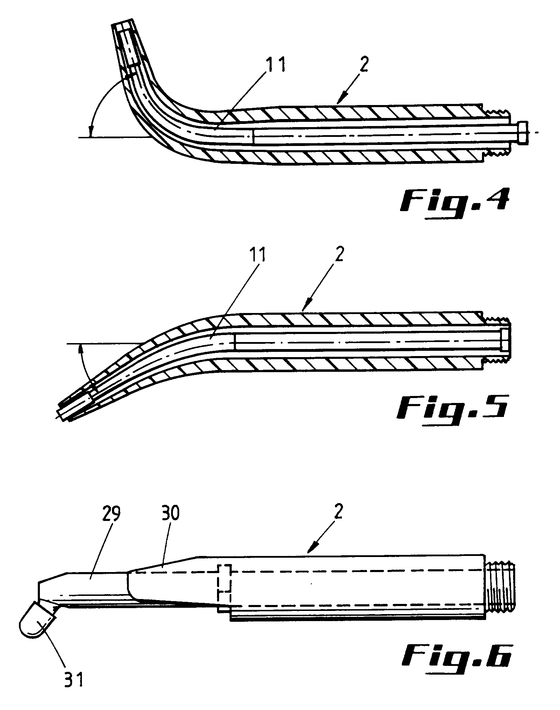

Un piston 7 divise la cavité 4 en deux compartiments. L'un de ces compartiments 8 sert à recevoir la matière d'obturation à appliquer et il est en communication avec l'extérieur par l'ouverture 9 prévue à l'extrémité distale de la partie d'embout 2. Dans l'autre compartiment 10 est logée une tige de transmission 11 qui est reliée au piston de manière à pouvoir lui transmettre une force de poussée et une force de traction en vue de la faire coulisser à l'intérieur de la cavité 4. Le piston 7 est, en service, capable de coulisser entre une première position qui est représentée en traits pleins sur la figure 3, et est située à une certaine distance de l'ouverture 9, et une deuxième position qui est représentée en traits mixtes sur la figure 3. Dans cette deuxième position le piston a coulissé un peu au-delà de l'ouverture 9. Il pourrait bien entendu être prévu qu'il coulisse uniquement jusqu'à l'ouverture 9, sans en faire saillie.

Dans la cavité 3, une tige de commande 12 est logée de manière à pouvoir y coulisser. Dans le présent exemple de réalisation, à son extrémité opposée à la partie d'embout 2, la tige de commande fait saillie en dehors de la partie de prise 1. Là elle se termine en un poussoir 13 sur lequel peut agir par exemple le pouce d'un utilisateur. L'extrémité de la partie de prise 1, où fait saillie la tige de commande 12, est fermée par une douille filetée 14 qui coopère avec une partie taraudée 15 de la partie de prise 1 et qui est traversée de manière ajustée par la tige de commande 12.

Dans l'exemple de réalisation illustré, du côté de la partie d'embout 2, la partie de prise comporte un premier tronçon 16 où la cavité 3 a une section transversale correspondant sensiblement au diamètre de la tige de commande 12. Ce tronçon 16 et la douille filetée 14 servent de moyens de guidage de la tige de commande 12. Entre le tronçon 16 et la partie taraudée 15 de la partie de prise 1 est disposé un deuxième tronçon 17 où la cavité 3 a une section transversale supérieure au diamètre de la tige de commande 12. Là est logé un ressort de rappel 18 ainsi qu'un épaississement cylindrique de la tige de commande 12. Cet épaississement est ici une bague 19, dans laquelle est passée la tige de commande 12 et qui est retenue sur celle-ci par une goupille transversale 20. Le ressort de rappel 18 est, dans cet exemple, un ressort de compression qui prend appui sur la partie de prise 1, à l'endroit de l'épaulement 21 formé dans la cavité 3 à la transition entre les tronçons 16 et 17 de cette partie de prise. Le ressort 18 est aussi en appui, à son autre extrémité, sur la bague 19, solidaire de la tige de commande 12.

La partie de prise est aussi pourvue, sur sa surface d'enveloppe, d'une bride 22. Celle-ci permet l'application de deux doigts d'une main de l'utilisateur, le pouce de celle-ci étant appliqué sur le poussoir 13. En serrant la main, la tige de commande 18 peut être enfoncée à l'intérieur du corps du dispositif en comprimant le ressort de rappel 18. Elle passe alors d'une position de repos, telle qu'illustrée sur la figure 3, à une position de fin de course, non représentée, où le ressort est complètement comprimé.

Dans l'exemple de réalisation illustré la tige de commande 12 et la tige de transmission 11 présentent des moyens de liaison mutuelle qui sont aisément détachables. La tige de transmission 11 est pourvue, à son extrémité opposée au piston 7, d'une bride terminale 23. La tige de commande 12 présente, à son extrémité à relier à la tige de transmission 11, une cavité axiale 24 dont la section transversale correspond sensiblement à celle de la tige de transmission 1. A son extrémité 25 tournée vers le poussoir 13, cette cavité axiale 24 s'élargit et elle reçoit une section transversale qui correspond à celle de la bride 23. Sur toute sa longueur, la cavité axiale 24, et donc aussi son extrémité 25, est ouverte latéralement en permettant une pénétration en sens radial de la tige de transmission 11 munie de sa bride terminale 23. Dans cette position de coopération, la tige de commande 12 peut transmettre à la tige de transmission 11, et donc au piston 7, une force de poussée lorsqu'elle est amenée, comme décrit précédemment, de sa position de repos à sa position de fin de course. La tige de commande 12 agit alors axialement sur la face frontale 26 de la bride 23 de la tige de transmission 11. La tige de commande 12 peut aussi transmettre à la tige de transmission 11, et donc au piston 7, la force de rappel en sens opposé qu'elle reçoit de la part du ressort 18 lors de son déplacement de sa position de fin de course vers sa position de repos. En effet, l'épaulement 27 formé à la transition entre la cavité axiale 24 et son extrémité élargie 25 prend alors appui sur la face 28 de la bride 23, qui est opposée à la face frontale 26 de celle-ci. Enfin, dans cette position de coopération, la tige de transmission 11 peut pivoter librement par rapport à la tige de commande 12 ce qui est particulièrement intéressant lorsqu'on visse la partie d'embout 2 sur la partie de prise 1.

Sur la figure 5 est illustrée, en coupe, la partie d'embout 2 de l'exemple de réalisation suivant les figures 1 à 3, mais dans une vue de profil. On peut ainsi constater que la partie d'embout est courbe et que la tige de transmission l'est dans une mesure correspondante.

On pourrait évidemment monter sur la partie de prise des parties d'embout de formes différentes, par exemple selon la dent à obturer ou selon la quantité d'amalgame à introduire. On peut voir sur la figure 4 une partie d'embout et une tige de transmission plus courbées que dans l'exemple de réalisation selon les figures 1 à 3 et 5.

On pourrait aussi prévoir, comme illustré sur la figure 6, une partie d'embout rectiligne dans laquelle peut coulisser une tige de transmission droite.

Une telle forme de réalisation est particulièrement avantageuse par exemple pour le support de cupules connues en soi qui contiennent des résines durcissables et qui sont mises sur le marché sous cette forme. La partie d'extrémité 30 de la partie d'embout 2 est conformée de manière à pouvoir coincer la partie arrière de la cupule 29 encore obturée par un capuchon 31. Lorsque l'on a ôté le capuchon et que l'on a actionné le poussoir 13, la tige de transmission pousse le piston 7 à l'intérieur de la cupule 29 et en expulse la résine durcissable dans la cavité dentaire.

Dans les exemples de réalisation illustrés, la partie d'embout 2, le piston 7 et la tige de transmission 11 sont fabriqués en une matière plastique, de préférence peu coûteuse. On peut prévoir de les mettre sur le marché déjà enfoncés l'un dans l'autre. Le reste du dispositif est par contre de préférence fabriqué en une matière de qualité, résistant avantageusement aux conditions de corrosion et de stérilisation les plus dures. On peut par exemple envisager pour la partie de prise et la tige de commande de l'acier inoxydable de qualité supérieure.

Dans l'exemple de réalisation illustré sur les figures 1 à 3 et 5, la partie d'embout a une longueur d'environ 11 cm, sur la figure 4 elle est supérieure à 9 cm. Ainsi la longueur de la partie d'embout ainsi que celle de la tige de transmission sont largement supérieures à la distance existant entre n'importe quelle dent d'une bouche de patient et ses lèvres. Par conséquent, l'extrémité à dévisser de la partie d'embout et surtout la partie de prise ne sont jamais en contact avec le patient.

Lorsque le traitement d'un patient est terminé, on dévisse la partie d'embout 2 de la partie de prise 1, on sort radialement la tige 11 et sa bride 23 de la cavité 24 et de son extrémité élargie 25. On jette alors de préférence ces éléments. On prélève une nouvelle partie d'embout, munie de son piston et de sa tige de transmission, de son emballage de préférence stérile et on enfonce radialement la tige 11 et sa bride 23 dans la cavité 24 de la tige de commande 12 et son extrémité élargie 25. On visse la nouvelle partie d'embout 2 à la partie de prise 1 et on peut passer au patient suivant sans aucun risque d'infection croisée entre patients. Aucun problème ne se pose quant à l'introduction d'une tige de piston dans une cavité courbe, puisque l'embout de remplacement contient déjà sa propre tige. Les problèmes de résidus durcis aux alentours de l'ouverture 9 dans la partie d'embout ne se posent plus. La transmission de force se fait parfaitement entre les deux tiges sans nécessiter de frottement entre elles et un seul ressort est suffisant pour rappeler l'ensemble des tiges dans leur position initiale. Enfin une grande souplesse est ainsi conférée au dispositif qui peut fonctionner avec des multiples embouts différents, sans problème.

Il doit être entendu que la présente invention n'est en aucune façon limitée à la forme de réalisation décrite ci-dessus et que bien des modifications peuvent y être apportées sans sortir du cadre du présent brevet.

On peut par exemple imaginer d'autres moyens de liaison entre la tige de commande et la tige de transmission que ceux décrits à titre d'exemple. On pourrait notamment prévoir un évidement dans la tige de transmission et une saillie coopérante sur la tige de commande.

On peut aussi envisager d'autres moyens de rappel qu'un ressort de compression. On peut envisager entre autres un ressort de traction ou des moyens pneumatiques, hydrauliques, électriques ou électro-magnétiques connus en soi.

On pourrait aussi imaginer une fabrication de la partie de prise en matière plastique également. Au lieu d'une forme de seringue, on pourrait prévoir une partie de prise en forme de pistolet ou encore d'autres modèles.

## Revendications

1. Dispositif d'application de matière d'obturation dans une cavité dentaire, comprenant
- un corps principal comportant une partie de prise (1) présentant une première cavité (3) et une partie d'embout (2) présentant une deuxième cavité (4),
- des moyens de raccordement (5, 6) qui sont portés par la partie de prise (1) et par la portée d'embout (2) et qui coopèrent de manière détachable et qui, lorsqu'ils coopèrent, permettent une communication entre les deux cavités (3, 4) susdites,
- un moyen de piston (7) divisant la deuxième cavité (4) en un premier et un deuxième compartiment (8, 10), le premier compartiment (8) servant à recevoir la matière d'obturation et étant en communication avec l'extérieur par une ouverture (9) dans la partie d'embout (2), le moyen de piston (7) étant capable de coulisser à l'intérieur de la deuxième cavité (4) entre une première position éloignée de l'ouverture susdite, et une deuxième position où il atteint ou éventuellement dépasse cette ouverture (9),
- une tige de transmission (11) logée dans le deuxième compartiment (10) et reliée au moyen de piston (7), de manière à lui transmettre une force de poussée pour le déplacer entre sa première position et sa deuxième position,
- une tige de commande (12) logée dans la première cavité (3) de manière à pouvoir y coulisser entre une position de repos et une position de fin de course, cette tige de commande (12) coopérant avec la tige de transmission (11) pendant son coulissement vers la position de fin de course de façon à lui transmettre ladite force de poussée, et
- un moyen de rappel (18) rappelant la tige de commande (12) dans sa position de repos,
caractérisé en ce que la tige de commande (12) et la tige de transmission (11) présentent des moyens de liaison mutuelle (23, 24, 25) détachables qui coopèrent de façon à transmettre aussi une force de rappel pendant le rappel de la tige de commande (12) dans sa position de repos.

2. Dispositif suivant la revendication 1, caractérisé en ce que la partie d'embout (2) et la tige de transmission (11) reliée au moyen de piston (7) forment des éléments à jeter après chaque emploi.

3. Dispositif suivant l'une ou l'autre des revendications 1 et 2, caractérisé en ce que la longueur de la partie d'embout (2) et celle de la tige de transmission (11) sont sensiblement supérieures à la distance existant entre n'importe quelle dent d'une bouche de patient et ses lèvres.

4. Dispositif suivant l'une quelconque des revendications 1 à 3, caractérisé en ce que la partie d'embout (2) est courbe et en ce que la tige de transmission (11) présente une allure correspondante.

5. Dispositif suivant l'une quelconque des revendications 1 à 3, caractérisé en ce que la partie d'embout (2) est droite et la tige de transmission (11) également.

6. Dispositif suivant l'une quelconque des revendications 1 à 5, caractérisé en ce que les moyens de raccordement (5, 6) précités peuvent être mutuellement raccordés ou détachés sans influencer la coopération entre lesdits moyens de liaison (23, 24, 25).

7. Dispositif suivant l'une quelconque des revendications 1 à 6, caractérisé en ce que les moyens de raccordement (5, 6) précités consistent en un filet externe (6) porté à une extrémité de la partie d'embout (2) et en un filet interne (5) porté à l'extrémité correspondante de la partie de prise (1) et en ce que les moyens de liaison (23) susdits de la tige de transmission (11), la tige de transmission (11) elle-même et le moyen de piston (7) sont capables de pivoter librement sur leur axe pendant un vissage desdits moyens de raccordement (5, 6).

8. Dispositif suivant l'une quelconque des revendications 1 à 7, caractérisé en ce que les moyens de liaison (23, 24, 25) détachables susdits comprennent une saillie (23) prévue à une extrémité de la tige de transmission (11) ou de la tige de commande (12) et un évidement (24, 25) prévu à une extrémité de la tige de commande (12) ou de la tige de transmission (11), dans lequel la saillie (23) peut pénétrer radialement pour y être logée sans possibilité de déplacement axial dans l'évidement (24, 25).

9. Dispositif suivant la revendication 8, caractérisé en ce que ladite saillie consiste en une bride (23) prévue à l'extrémité susdite de la tige de transmission (11), en ce que ledit évidement consiste en une cavité axiale (24) qui est prévue dans l'extrémité susdite de la tige de commande (12) et qui a une section transversale correspondant au diamètre de la tige de transmission, en ce que cette cavité axiale (24) s'élargit (en 25) à son extrémité éloignée de l'extrémité de la tige de commande (12) de façon à atteindre une section transversale correspondant à celui de ladite bride (23) et en ce qu'elle présente une ouverture latérale permettant une pénétration en sens radial de la tige de transmission (11) munie de sa bride (13).

10. Dispositif suivant l'une quelconque des revendications 1 à 9, caractérisé en ce que la partie d'embout (2) présente une courbure plus ou moins prononcée en fonction de la dent à obturer.

11. Dispositif suivant l'une quelconque des revendications 1 à 10, caractérisé en ce que la partie d'embout (2) comporte, à son extrémité opposée à la partie de prise (1), des moyens de fixation d'une cupule (29) à résine durcissable courante en soi.

12. Dispositif suivant l'une quelconque des revendications 1 à 10, caractérisé en ce que la partie d'embout (2), la tige de transmission (11) et le moyen de piston (7) sont en matière plastique.

13. Dispositif suivant l'une quelconque des revendications 1 à 12, caractérisé en ce que le moyen de rappel est un ressort de compression (18) logé dans la première cavité (3).

14. Partie d'embout (2) de dispositif d'application de matière d'obturation dans une cavité dentaire suivant l'une quelconque des revendications 1 à 13, comprenant une cavité (4) et des moyens de raccordement (6) destinés à coopérer de manière détachable avec des moyens de raccordement (5) portés par la partie de prise (1), caractérisée en ce qu'elle contient dans la cavité (4) le moyen de piston (7) divisant celle-ci en le premier et le deuxième compartiment (8, 10) et la tige de transmission (11) munie desdits moyens de liaison mutuelle, avant le montage sur la partie de prise.

## Claims

1. A device for applying filling material into a dental cavity, comprising :
- a main body including a grip portion (1) having a first cavity (3) and a tip portion (2) having a second cavity (4),
- coupling means (5, 6) provided on the grip portion (1) and on the tip portion (2) and cooperating in a detachable way, which coupling means permit, when cooperating together, a communication between said two cavities (3, 4),
- a piston means (7) dividing the second cavity (4) into a first and a second compartment (8, 10), the first compartment (8) being destined to receive the filling material and communicating with the outside through an opening (9) in the tip portion (2), the piston means (7) being slidable within the second cavity (4) between a first position removed from said opening and a second position wherein it reaches or possibly projects out of this opening (9),
- a transmission rod (11) housed in the second compartment (10) and connected to the piston means (7) to transmit a pushing force thereto for displacing it between its first and second position,
- an operating rod (12) slidably housed in the first cavity (3) between a rest position and a terminal stroke position, said operating rod (12) cooperating with the transmission rod (11) when sliding towards the terminal stroke position to transmit said pushing force thereto, and
- a return means (18) for returning the operating rod (12) to its rest position,
characterised in that the operating rod (12) and the transmission rod (11) comprise mutually detachable connection means (23, 24, 25) which cooperate such as to transmit also a return force when returning the operating rod (12) to its rest position.

2. A device according to claim 1, characterised in that the tip portion (2) and the transmission rod (11) connected to the piston means (7) are disposable elements to be disposed of after each use.

3. A device according to either one of the claims 1 and 2, characterised in that both the tip portion (2) and the transmission rod (11) have a length greater than the distance between any tooth of a patient's mouth and his lips.

4. A device according to any one of the claims 1 to 3, characterised in that the tip portion (2) is curved and the transmission rod (11) shows a corresponding curvature.

5. A device according to any one of the claims 1 to 3, characterised in that both the tip portion (2) and the transmission rod (11) are straight.

6. A device according to any one of the claims 1 to 5, characterised in that said coupling means (5, 6) may be mutually coupled or detached without influencing the cooperation between said connection means (23, 24, 25).

7. A device according to any one of the claims 1 to 6, characterised in that said coupling means (5, 6) consist of an outer thread (6) on one extremity of the tip portion (2) and an inner thread (5) on the corresponding extremity of the grip portion (1), and in that said connection means (23) of the transmission rod (11), the transmission rod (11) itself and the piston means (7) can rotate freely around their axis upon screwing said coupling means (5, 6).

8. A device according to any one of the claims 1 to 7, characterised in that said detachable connection means (23, 24, 25) comprise a projection (23) provided on one extremity of the transmission rod (11) or of the operating rod (12) and a recess (24, 25) provided on one extremity of the operating rod (12) or of the transmission rod (11) wherein the projection (23) can penetrate radially to be housed therein without possibility for axial movement in the recess (24, 25).

9. A device according to claim 8, characterised in that said projection consists of a flange (23) provided on said extremity of the transmission rod (11), in that said recess consists of an axial cavity (24) provided in said extremity of the operating rod (12) and having a cross-section corresponding to the diameter of the transmission rod, in that said axial cavity (24) broadens (in 25) at its extremity removed from the extremity of the operating rod (12) to achieve a cross-section corresponding to the one of said flange (23), and in that it has a lateral opening permitting the transmission rod (11) equipped with its flange (13) to be inserted radially.

10. A device according to any one of the claims 1 to 9, characterised in that the tip portion (2) is curved to a degree depending on the tooth to be filled.

11. A device according to any one of the claims 1 to 10, characterised in that the tip portion (2) includes, on its extremity opposed to the grip portion (1), means for fixing a cupule (29) with a curable resin known per se.

12. A device according to any one of the claims 1 to 10, characterised in that the tip portion (2), the transmission rod (11) and the piston means (7) are from plastic material.

13. A device according to any one of the claims 1 to 12, characterised in that the return means is a compression spring (18) housed in the first cavity (3).

14. A tip portion (2) of a device for applying filling material in a dental cavity according to any one of the claims 1 to 13, comprising a cavity (4) and coupling means (6) destined to cooperate in a detachable way with coupling means (5) provided on the grip portion (1), characterised in that, prior to mounting it on the grip portion, it contains, in the cavity (4), the piston means (7) dividing this cavity in the first and second compartment (8, 9) and the transmission rod (11) equipped with said mutual connection means.

## Patentansprüche

1. Vorrichtung zur Applikation von Füllmittel in eine Zahnhöhle, umfassend
- einen Grundkörper, der ein Griffteil (1) mit einem ersten Hohlraum (3) und ein Ansatzteil (2) mit einem zweiten Hohlraum (4) aufweist,
- Verbindungseinrichtungen (5, 6), die vom Griffteil (1) und vom Ansatzteil (2) getragen werden und die in lösbarer Weise zusammenwirken und die, wenn sie zusammenwirken, eine Verbindung zwischen den beiden oben genannten Hohlräumen (3, 4) ermöglichen,
- eine Kolbeneinrichtung (7), die den zweiten Hohlraum (4) in ein erstes und ein zweites Abteil (8, 10) unterteilt, wobei das erste Abteil (8) zur Aufnahme des Füllmittels dient und durch eine Öffnung (9) im Ansatzteil (2) mit der Außenseite verbunden ist, wobei sich die Kolbeneinrichtung (7) im Inneren des zweiten Hohlraums (4) zwischen einer von der oben genannten Öffnung entfernten ersten Stellung und einer zweiten Stellung verschieben läßt, in der sie diese Öffnung (9) erreicht oder gegebenenfalls überschreitet,
- eine Betätigungsstange (11), die im zweiten Abteil (10) untergebracht und mit der Kolbeneinrichtung (7) verbunden ist, so daß sie eine Druckkraft darauf überträgt, um sie zwischen ihrer ersten Stellung und ihrer zweiten Stellung zu verschieben,
- eine Steuerstange (12), die im ersten Hohlraum (3) untergebracht ist, so daß sie sich dort zwischen einer Ruhestellung und einer Wegendstellung verschieben kann, wobei diese Steuerstange (12) während ihrer Verschiebung in Richtung der Wegendstellung mit der Betätigungsstange (11) zusammenwirkt, so daß sie die besagte Druckkraft darauf überträgt, und
- eine Rückholeinrichtung (18), welche die Steuerstange (12) in ihre Ruhestellung zurückbewegt,
**dadurch gekennzeichnet**, daß die Steuerstange (12) und die Betätigungsstange (11) lösbare Mittel zur gegenseitigen Verbindung (23, 24, 25) aufweisen, die zusammenwirken, so daß sie auch während der Zurückbewegung der Steuerstange (12) in ihre Ruhestellung eine Rückholkraft übertragen.

2. Vorrichtung nach Anspruch 1, **dadurch gekennzeichnet**, daß das Ansatzteil (2) und die mit der Kolbeneinrichtung (7) verbundene Betätigungsstange (11) Elemente zum Wegwerfen nach jeder Verwendung bilden.

3. Vorrichtung nach Anspruch 1 oder 2, **dadurch gekennzeichnet**, daß die Länge des Ansatzteils (2) und diejenige der Betätigungsstange (11) wesentlich größer sind als der Abstand, der zwischen jedem beliebigen Zahn eines Patientenmundes und seinen Lippen vorhanden ist.

4. Vorrichtung nach einem beliebigen der Ansprüche 1 bis 3, **dadurch gekennzeichnet**, daß das Ansatzteil (2) gebogen ist, und daß die Betätigungsstange (11) einen entsprechenden Verlauf aufweist.

5. Vorrichtung nach einem beliebigen der Ansprüche 1 bis 3, **dadurch gekennzeichnet**, daß das Ansatzteil (2) gerade ist, und die Betätigungsstange (11) ebenfalls.

6. Vorrichtung nach einem beliebigen der Ansprüche 1 bis 5, **dadurch gekennzeichnet**, daß die vorgenannten Verbindungseinrichtungen (5, 6) miteinander verbunden oder voneinander gelöst werden können, ohne das Zusammenwirken zwischen den besagten Verbindungsmitteln (23, 24, 25) zu beeinflussen.

7. Vorrichtung nach einem beliebigen der Ansprüche 1 bis 6, **dadurch gekennzeichnet**, daß die vorgenannten Verbindungseinrichtungen (5, 6) aus einem an einem Ende des Ansatzteils (2) getragenen Außengewinde (6) und einem am entsprechenden Ende des Griffteils (1) getragenen Innengewinde (5) bestehen, und daß sich die oben genannten Verbindungsmittel (23) der Betätigungsstange (11), die Betätigungsstange (11) selbst und die Kolbeneinrichtung (7) während eines Zusammenschraubens der besagten Verbindungseinrichtungen (5, 6) frei auf ihrer Achse drehen können.

8. Vorrichtung nach einem beliebigen der Ansprüche 1 bis 7, **dadurch gekennzeichnet**, daß die oben genannten lösbaren Verbindungsmittel (23, 24, 25) einen an einem Ende der Betätigungsstange (11) oder der Steuerstange (12) vorgesehenen Vorsprung (23) und eine an einem Ende der Steuerstange (12) oder der Betätigungsstange (11) vorgesehene Aussparung (24, 25) umfassen, in welche der Vorsprung (23) in radialer Richtung eindringen kann, um dort ohne die Möglichkeit einer Axialverschiebung in der Aussparung (24, 25) beherbergt zu werden.

9. Vorrichtung nach Anspruch 8, **dadurch gekennzeichnet**, daß der besagte Vorsprung aus einem Flansch (23) besteht, der an dem oben genannten Ende der Betätigungsstange (11) vorgesehen ist, daß die besagte Aussparung aus einer axialen Vertiefung (24) besteht, die in dem oben genannten Ende der Steuerstange (12) vorgesehen ist und die einen Querschnitt aufweist, welcher dem Durchmesser der Betätigungsstange entspricht, daß sich diese axiale Vertiefung (24) an ihrem vom Ende der Steuerstange (12) entfernten Ende erweitert (bei 25), so daß sie einen Querschnitt erreicht, der demjenigen des besagten Flanschs (23) entspricht, und daß sie eine seitliche Öffnung aufweist, die ein Eindringen der mit ihrem Flansch (13) versehenen Betätigungsstange (11) in radialer Richtung ermöglicht.

10. Vorrichtung nach einem beliebigen der Ansprüche 1 bis 9, **dadurch gekennzeichnet**, daß das Ansatzteil (2) in Abhängigkeit von dem zu füllenden Zahn eine mehr oder weniger ausgeprägte Krümmung aufweist.

11. Vorrichtung nach einem beliebigen der Ansprüche 1 bis 10, **dadurch gekennzeichnet**, daß das Ansatzteil (2) an seinem dem Griffteil (1) entgegengesetzten Ende Befestigungseinrichtungen für einen an sich gebräuchlichen Becher (29) mit aushärtbarem Harz aufweist.

12. Vorrichtung nach einem beliebigen der Ansprüche 1 bis 10, **dadurch gekennzeichnet**, daß das Ansatzteil (2), die Betätigungsstange (11) und die Kolbeneinrichtung (7) aus Kunststoff sind.

13. Vorrichtung nach einem beliebigen der Ansprüche 1 bis 12, **dadurch gekennzeichnet**, daß die Rückholeinrichtung eine im ersten Hohlraum (3) untergebrachte Druckfeder (18) ist.

14. Ansatzteil (2) für eine Vorrichtung zur Applikation von Füllmittel in eine Zahnhöhle gemäß einem beliebigen der Ansprüche 1 bis 13, umfassend einen Hohlraum (4) und Verbindungseinrichtungen (6), die dazu bestimmt sind, in lösbarer Weise mit vom Griffteil (1) getragenen Verbindungseinrichtungen (5) zusammenzuwirken, **dadurch gekennzeichnet**, daß sie vor der Anbringung auf dem Griffteil im Hohlraum (4) die Kolbeneinrichtung (7), welche diesen in das erste und das zweite Abteil (8, 10) unterteilt, sowie die Betätigungsstange (11) enthält, welche mit den besagten Mitteln zur gegenseitigen Verbindung versehen ist.
